# Europäisches Patentamt
# European Patent Office
# Office européen des brevets

(19)

(11) Veröffentlichungsnummer : **0 139 857**
**B1**

(12) # EUROPÄISCHE PATENTSCHRIFT

(45) Veröffentlichungstag der Patentschrift :
27.07.88

(21) Anmeldenummer : 84107978.3

(22) Anmeldetag : 07.07.84

(51) Int. Cl.⁴ : **B 25 J 15/00**

(54) **Roboteranlagen.**

(30) Priorität : 11.07.83 SE 8303930

(43) Veröffentlichungstag der Anmeldung :
08.05.85 Patentblatt 85/19

(45) Bekanntmachung des Hinweises auf die Patenterteilung : 27.07.88 Patentblatt 88/30

(84) Benannte Vertragsstaaten :
AT BE CH DE FR GB IT LI NL

(56) Entgegenhaltungen :
DE-A- 1 602 890
DE-A- 2 536 930
DE-A- 3 141 994
GB-A- 2 102 763

(73) Patentinhaber : ASEA AB

S-721 83 Västeras (SE)

(72) Erfinder : Jannborg, Björn
Löpargatan 6
S-722 41 Västerås (SE)
Erfinder : Lundström, Mats
Asgatan 6C
S-724 63 Västerås (SE)

(74) Vertreter : Boecker, Joachim, Dr.-Ing.
Rathenauplatz 2-8
D-6000 Frankfurt a.M. 1 (DE)

## Beschreibung

Die vorliegende Erfindung betrifft eine Roboteranlage.

Bei dem Zusammenbau mehrerer Teile zu einem Produkt oder bei dem Anbau mehrerer Teile an ein Teilprodukt in einer Montagestation mit Hilfe eines Roboters kann die Heranführung der Teile durch den Roboter aus den Magazinen zu der Montagestation einen langen Weg erfordern, dessen Zurücklegung erhebliche Zeit beansprucht. Die für diese Transportbewegung erforderliche Zeit kann für den Produktionstakt bestimmend sein. Dagegen ist für das zielgenaue Absetzen der Teile auf dem Montageträger bzw. ihr Einpassen in andere Teile wenig Zeit erforderlich. Wenn außerdem die meisten zu montierenden Teile so unterschiedlich sind, daß für sie unterschiedliche Greifvorrichtungen erforderlich sind, so ist für jedes Teil ein Roboter oder ein Roboterarm erforderlich.

In der EP-A-0 94 338, Anmeldung entsprechend Art. 54.3 EPÜ, wird eine Roboteranlage beschrieben, in der ein Roboter in derselben Montagestation mehrere Teile zu einem Produkt zusammenbaut. Hierbei sind die Roboterbewegungen bei der Montage mehrerer Teile mittels eines einzigen Roboters gering, und die Montage der Teile kann in schneller Folge durchgeführt werden. Diese verbesserte Ausnutzung des Roboters wird dadurch erreicht, daß der Roboter mit einem indexierbaren und in mehreren festen Positionen fixierbaren Revolverkopf versehen ist, der mehrere Greifvorrichtungen trägt, die den einzelnen in der betreffenden Montagestation zu montierenden Teilen angepaßt sind. Diese bekannte Roboteranlage enthält mehrere Transportbahnen oder Magazine mit Zuführvorrichtungen zum Vorschub von Teilen in den Arbeitsbereich des Roboters. Der Revolverkopf ist am unteren Ende des Unterarms des Roboters derart befestigt, daß seine Drehachse mit der Drehachse des Handgelenks einen Winkel bildet, der vorzugsweise 45 Grad beträgt. Zum Revolverkopf gehört eine drehbare Scheibe, an welcher die Greifvorrichtungen in solcher Weise angeordnet sind, daß in einer bestimmten Position des Revolverkopfes die Drehachse des Handgelenks mit der Symmetrieachse der Greifvorrichtung zusammenfällt bzw. in die Symmetrieebene der Greifvorrichtung fällt. Dies erleichtert die Montage, da beim Montieren nur kleine Hebebewegungen und horizontale Transportbewegungen erforderlich sind. Die Anzahl der Greifvorrichtungen auf dem Revolverkopf kann variieren ; in den meisten Fällen sind drei, vier oder sechs Greifvorrichtungen vorhanden. Die Magazine können verschiedener Art sein. Das Magazin für asymmetrische Teile enthält vorzugsweise Paletten mit Positionierungsgliedern zur Fixierung der Teile in einem bestimmten Anordnungsmuster, das so orientiert ist, daß die Teile von den Greifvorrichtungen erfaßt werden können. Die Roboteranlage kann einen oder mehrerer Roboter enthalten und mit anderen Montagegeräten, wie zum Beispiel Maschinen zum Einsetzen und Festziehen von Schrauben, ausgerüstet sein.

Der Erfindung liegt die Aufgabe zugrunde eine Roboteranlage der eingangs genannten Art in der Weise weiterzuentwickeln, daß eine freiere Einstellung der Werkzeuge an der Tragvorrichtung möglich wird.

Zur Lösung dieser Aufgabe wird die Roboteranlage gemäß Anspruch 1 bzw. 2 vorgeschlagen. Vorteilhafte Ausgestaltungen der Erfindung sind in den weiteren Ansprüchen genannt.

Gemäß der Erfindung gehört zu der Roboteranlage eine Montage- oder Bearbeitungsstation, in welcher mehrere Teile zu einem Gegenstand zusammengebaut werden, oder ein Werkstück von mehreren verschiedenen Werkzeugen mit unterschiedlichen Geschwindigkeiten bearbeitet wird. Die Greifvorrichtungen für die zu montierenden Teile bzw, die sonstigen Werkzeuge für die verschiedenen Bearbeitungsvorgänge sind an einer drehbaren Tragvorrichtung angebracht, die in verschiedene Winkellagen gebracht werden kann. Die Werkzeuge (z. B. die Greifvorrichtungen) bzw. die Werkzeughalter sind derart auf dem Ring bzw. der Scheibe der Tragvorrichtung angeordnet, daß sie in Umfangsrichtung des Ringes bzw. der Scheibe in jede gewünschte Winkellage geschoben und in dieser fixiert werden können. Der Ring oder die Scheibe kann beispielsweise mit einer schwalbenschwanzförmigen Führung versehen sein, während das Werkzeug oder der Werkzeughalter mit einer der Führung angepaßten Nut versehen sein kann. Das Werkzeug oder der Werkzeughalter ist mit einer Verriegelungsanordnung versehen zur Fixierung in der gewünschten Winkellage nach erfolgter Verschiebung in Umfangsrichtung.

Die Erfindung erlaubt eine stufenlose Einstellung der Werkzeuge um die Tragvorrichtung herum, wodurch es möglich wird, die Einstellung der Größe und Form des Werkzeugs bzw. der Bauteile anzupassen. Hierdurch erhält man eine große Flexibilität und frei verfügbare Möglichkeiten bei dem Aufbau einer Montage- oder Bearbeitungsstation.

Anhand der in den Figuren gezeigten Ausführungsbeispiele soll die Erfindung näher erläutert werden. Es zeigen :

Figur 1 eine perspektivische Darstellung einer Roboteranlage gemäß der Erfindung, in der die Tragvorrichtung für die Werkzeuge (Greifvorrichtungen) Teil des Revolverkopfs ist,

Figur 2 in vergrößertem Maßstab das freie Ende des Roboterarms mit dem Revolverkopf und den Greifvorrichtungen,

Figur 3 die zu dem Revolverkopf gehörende Scheibe, die als Halter für die in Umfangsrichtung verschiebbaren Befestigungsvorrichtungen für Greifvorrichtungen und andere Werkzeuge dient,

Figur 4 eine andere Ausführungsform gemäß der Erfindung, bei welcher die Tragvorrichtung direkt an dem Roboterarm zusammen mit einem Druckmittelübertragungskopf (swivel) zur Übertragung von Druckmittel zur Betätigung der Werkzeuge angeordnet ist,

Figur 5 eine perspektivische Darstellung der ringförmigen Scheibe für die Befestigung der Werkzeuge teilweise im Schnitt,

Figur 6 einen Schnitt durch die ringförmigen Scheibe und eine Ansicht des auf der Scheibe befestigten Werkzeugs.

In den Figuren bezeichnet 1 eine Montagebahn zur schrittweisen Verschiebung von Montageträgern 2,3 in die bzw. aus der betrachteten Montagestation 4, in der sich ein leerer Montageträger 2 befindet. Die Montageträger 2,3 wandern in Richtung der Pfeile 5. Der Montageträger 3, der sich auf dem Wege weg von der Montagestation 4 befindet, trägt einen montierten Gegenstand (Produkt) 6. Ein Roboter 7 ist an einem Schlitten 8 aufgehängt, der auf einer Führungsbahn 10 in Richtung der Pfeile 11 verschiebbar ist. Hierdurch erhält der Roboter 7 einen großen Arbeitsbereich. In der Montagestation 4 befinden sich Magazin 12, 13, 14 und 15 für die Teile, aus denen die Gegenstände 6 zusammengesetzt werden. Das Magazin 12 enthält einen Stapel Grundplatten 16, und die Magazine 13 und 14 enthalten Teile 17 bzw. Deckplatten 18, die in einem vorbstimmten Anordnungsmuster auf Paletten 20 bzw. 21 plaziert und fixiert sind, die zu den Magazinen 13 bzw. 14 gehören. Bei dem Magazin 15 handelt es sich um einen Vibrationsausgeber für Scheiben 22 oder ähnliche Teile. Vor der Montagestation ist ein Schraubenzieher 23 angeordnet. Das Handgelenk 24 am unteren Ende des Unterarms 25 des Roboters 7 trägt einen Revolverkopf 26 mit Greifvorrichtungen 27 zum Greifen der Teile 16, 17, 18 und 22. Zum Revolverkopf 26 gehört eine Scheibe 28, die mittels einer Stange 31 am Flansch 30 des Handgelenks 24 befestigt ist. An der Scheibe 28 ist eine zweite Scheibe 32 drehbar angeordnet. Diese Scheibe 32 trägt die Greifvorrichtungen 27. Die Dreachse des Revolverkopfes bildet einen Winkel von 45 Grad mit der Drehachse des Handgelenks 24. Der Revolverkopf 26 ist so ausgebildet und angeordnet, daß die Symmetrieachse der symmetrisch aufgebauten Greifvorrichtungen 27 in einer Position des Revolverkopfes mit der Drehachse des Handgelenks 24 zusammenfällt. Auf der Scheibe 28 ist eine Befestigungsvorrichtung 33 angebracht für eine Antriebsvorrichtung 34 zur Positionierung des Revolverkopfes sowie Anschlüsse für Bedienungsleitungen 35, 36 und 37, beispielsweise für Druckluft, zur Betätigung der Greifvorrichtungen 27 und zur Fixierung des Revolverkopfes 26 in seinen verschiedenen Positionen. Die Scheiben 28 und 32 sind mit Zuführkanälen für Treibmittel zur Betätigung der Greifvorrichtungen versehen.

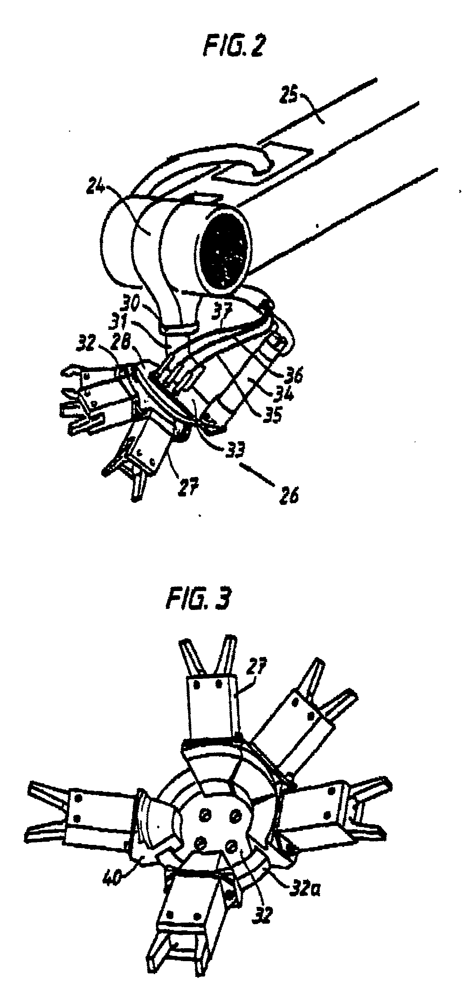

Die Scheibe 32 ist mit einem Tragring 32a versehen, der die Befestigungsglieder 40 trägt, an denen die Greifvorrichtungen angebracht werden. Diese Befestigungsglieder 40 sind in Umfangsrichtung auf dem Tragring 32a verschiebbar, so daß sie in wahlfreiem Abstand voneinander angeordnet und fixiert werden können, so wie es aus Figur 3 hervorgeht. Eine individuelle Ausrichtung der Greifvorrichtungen kann durch die Formgebung der Tragflächen der Befestigungsglieder 40 für die Greifvorrichtungen 27 oder durch einem Adapter erreicht werden, der zwischen dem Befestigungsglied 40 und der Greifvorrichtung 27 angebracht wird.

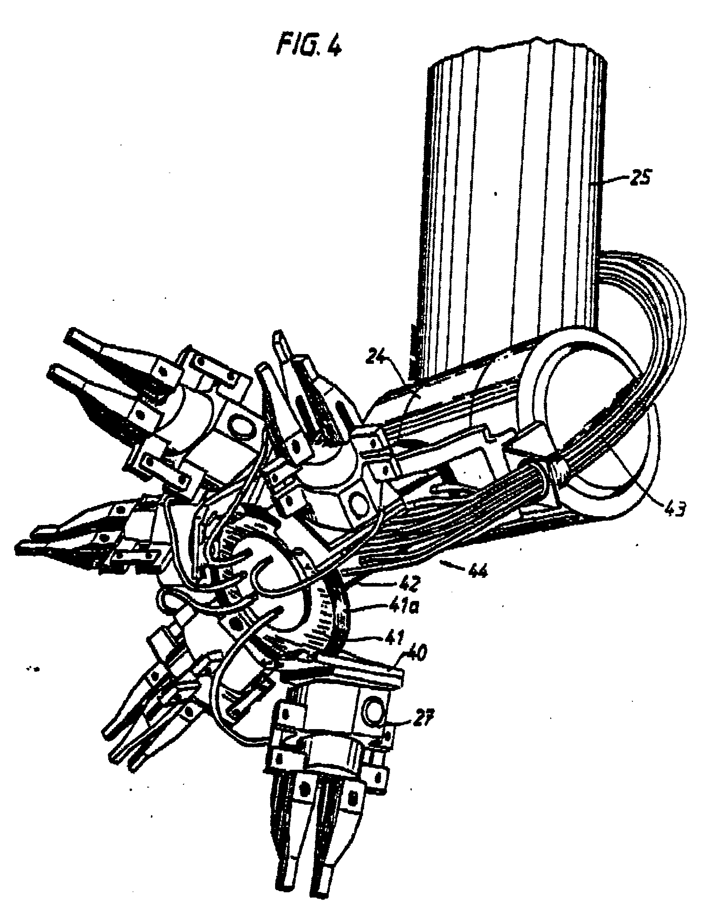

Bei der Ausführungsform nach Figur 4 ist die Scheibe 41, die der Scheibe 32 des Revolverkopfes 26 entspricht, auf einer nicht dargestellten Welle in einer Hülse 42 gelagert, die mit dem Handgelenk 24 fest verbunden ist. Die Scheibe 41 ist mit einem Tragring 41a versehen, der dem Tragring 32a entspricht, auf dem die Befestigungsvorrichtungen 40 für die Greifvorrichtungen 27 angebracht sind, wobei auch hier die Befestigungsvorrichtungen 40 in jede gewünschte Winkellage in Umfangsrichtung verschoben werden können. Die Drehachse der Scheibe 41 und die äußere Drehachse des Handgelenks liegen koaxial zueinander. Die Scheibe 41 ist über eine nicht dargestellte Welle in der Hülse 42 an die Ausgangsdrehachse des Handgelenks angeschlossen und wird von einem der Antriebsmotoren des Roboters in die gewünschte Winkellage gedreht. Die Hülse 42 und die genannten Welle bilden einen « swivel » 44 (siehe DE-A-33 00 3 61, insbesondere Seite 8) für die Überführung von Druckmedium zur Betätigung der Greifvorrichtungen 27. Die Hülse 42 ist über das Leitungsbündel 43 mittels einer Ventileinheit an eine Druckmittelquelle angeschlossen.

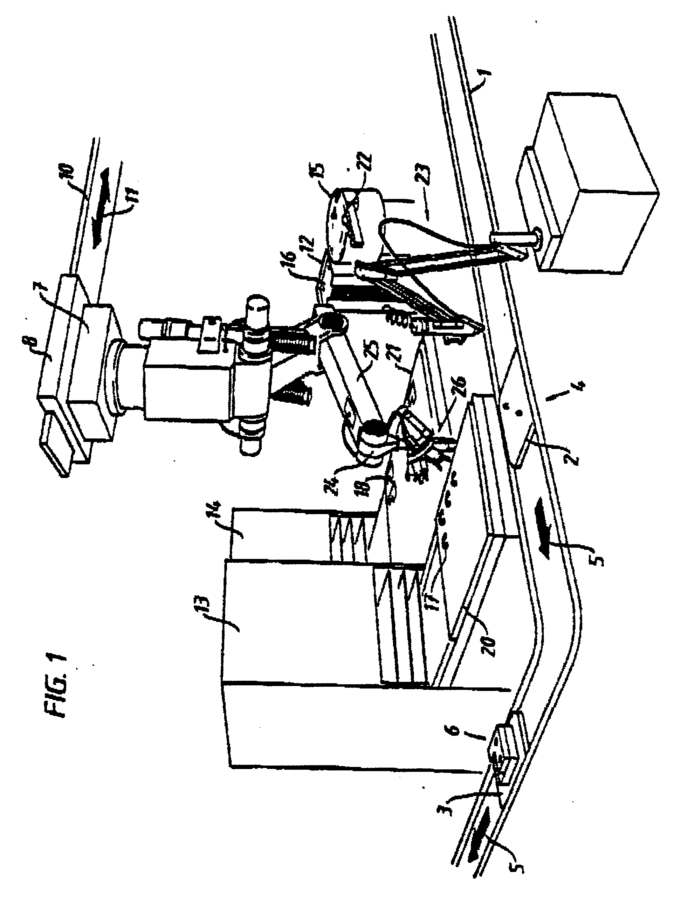

Die Roboteranlage nach den Figuren 1 bis 3 arbeitet wie folgt :

Während der Zeit, in der ein Montageträger 3 mit einem fertig montierten Gegenstand 6 von der Montagestation 4 wegtransportiert und durch einen anderen leeren Montageträger 2 ersetzt wird, holt der Roboter 7 eine Grundplatte 16 aus dem Magazin 12, zwei Teile 17 von der Palette 20 des Magazins 13, eine Deckplatte 18 von der Palette 21 des Magazins 14 und zwei Unterlegscheiben 22 o. dgl. aus dem Magazin 15. Der Revolverkopf 26 mit den Teilen wird zur Montagestation gefahren, wo die Teile zusammengebaut werden. Die Teile können in schneller Folge auf dem Montageträger 2 abgesetzt werden, da der Roboter bei der Montage nur kurze Bewegungen auszuführen braucht. Da der Revolverkopf 26 in seinen Greifvorrichtungen 27 mehrere Teile gleichzeitig bereithält, braucht er für die Montage jedes weiteren Teils nur um eine kleine Strecke angehoben und eventuell auch nur um eine kleine Strecke versetzt zu werden. Durch Drehung des Revolverkopfs um seine eigene Drehachse in eine neue Rastposition wird ein neues Teil in eine geeignete Montagestellung vorgeschoben. Bei einer Ausführung, bei welcher die Symmetrieachse oder die Symmetrieebene einer Greifvorrichtung mit der Drehachse des Handgelenks zusammenfällt, braucht in gewissen Fällen der Revolverkopf nur zu einer Drehung in eine neue Rastposition angehoben und danach zur Montage des nächsten Teils gesenkt zu werden. Die Bewegungen sind unerheblich und die in den Greifvorrichtungen des Revolverkopfs gehaltenen Teile können in schneller Folge montiert werden. Nachdem der Roboter 7 die Teile auf dem Montageträger abgesetzt hat, können mit dem automatischen Schraubenzieher 23 Schrauben in den zusammengesetzten Gegenstand in der Montagestation 4 eingesetzt und festgezogen werden.

Die Roboteranlage nach Figur 4 arbeitet in entsprechender Weise.

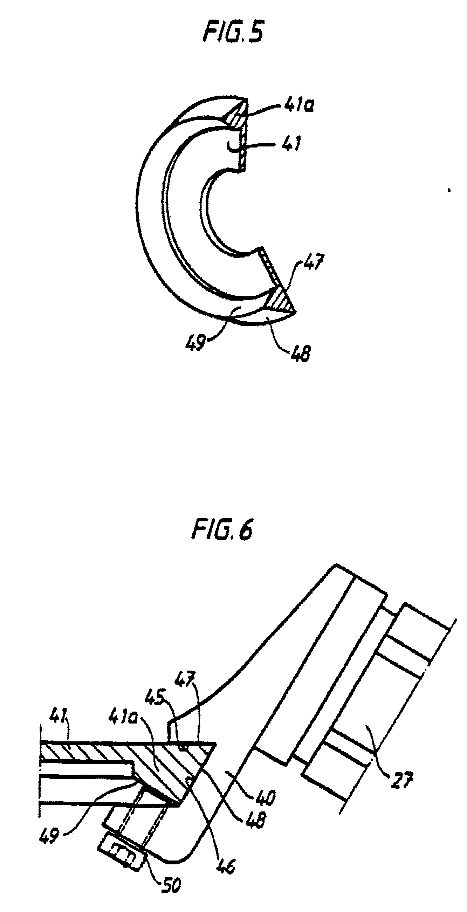

In Figur 5 wird eine Ausführungsform der Scheibe 41 und ihres äußeren schwalbenschwanzförmigen Tragringes 41a genauer dargestellt. Das Befestigungsglied 40 für das Werkzeug kann zweckmäßiger Weise so ausgebildet sein, daß es den schwalbenschwanzförmigen Tragring 41a der Scheibe 41 umgreift und zwei Flächen 45 und 46 besitzt, die mit einer Fläche 47 und einer äußeren Peripheriefläche 48 des schwalbenschwanzförmigen Tragringes 41a zusammenwirken. In dem Befestigungsglied 40 sind Befestigungsschrauben 50 vorhanden, die gegen die andere Seitenfläche 49 des schwalbenschwanzförmigen Tragringes 41a drücken und dadurch das Befestigungsglied 40 auf der Scheibe 41 fixieren.

**Patentansprüche**

1. Roboteranlage zur Montage mehrerer vorzugsweise unterschiedlicher Bauteile an oder zu einem Produkt oder zur Bearbeitung eines Werkstückes mit einer Anzahl von Geschwindigkeiten mit einer Montage- oder Bearbeitungsstation (4), mit einem Roboter (7) und mit Transportbahnen oder Magazinen (12, 13, 14, 15) mit Zuführvorrichtungen zum Vorschub von Bauteilen (16, 17, 18, 22) in den Arbeitsbereich des Roboters (7), wobei der Roboter eine in mehrere Positionen einstellbare, als rotierbaren Ring ausgebildete Tragvorrichtung besitzt, die mit einer Anzahl individuell bedienbarer und den entsprechenden Bauteilen oder Werkstücken angepaßten Werkzeugen (27), wie zum Beispiel Greifvorrichtungen für die Bauteile, bestückt ist, welche Werkzeuge um den Umfang des genannten Ringes in beliebigen Mittelspunktswinkellagen angeordnet werden können, und wobei die Drehung und Positionierung der Tragvorrichtung in die gewünschte Winkellage von der Steuerausrüstung des Roboters (7) gesteuert wird.

2. Roboteranlage zur Montage mehrerer vorzugsweise unterschiedlicher Bauteile an oder zu einem Produkt oder zur Bearbeitung eines Werkstückes mit einer Anzahl von Geschwindigkeiten mit einer Montage- oder Bearbeitungsstation (4), mit einem Roboter (7) und mit Transportbahnen oder Magazinen (12, 13, 14, 15) mit Zuführvorrichtungen zum Vorschub von Bauteilen (16, 17, 18, 22) in den Arbeitsbereich des Roboters (7), wobei der Roboter eine in mehrere Positionen einstellbare, als rotierbare Scheibe ausgebildete Tragvorrichtung besitzt, die mit einer Anzahl individuell bedienbarer und den entsprechenden Bauteilen oder Werkstücken angepaßten Werkzeugen (27), wie zum Beispiel Greifvorrichtungen für die Bauteile, bestückt ist, welche Werkzeuge um den Umfang der genannten Scheibe in beliebigen Mittelspunktswinkellagen angeordnet werden können, wobei die Drehung und Positionierung der Tragvorrichtung in die gewünschte Winkellage von der Steuerausrüstung des Roboters (7) gesteuert wird und wobei die Scheibe mehrere in Umfangsrichtung verschiebbare Befestigungsglieder (40) für Werkzeuge (27) trägt, welche Befestigungsglieder (40) mit Vorrichtungen zu ihrer Fixierung auf der Scheibe versehen sind.

3. Roboteranlage nach Anspruch 1, dadurch gekennzeichnet, daß der genannte Ring mehrere in Umfangsrichtung verschiebbare Befestigungsglieder (40) für Werkzeuge (27) trägt, welche Befestigungsglieder (40) mit Vorrichtungen zu ihrer Fixierung auf dem Ring versehen sind.

4. Roboteranlage nach Anspruch 2 oder 3, dadurch gekennzeichnet, daß der Ring oder die Scheibe direkt auf dem Handgelenk (24) des Roboters (7) angebracht ist und um die Ausgangsachse des Handgelenks (24) drehbar ist.

5. Roboteranlage nach Anspruch 2 oder 3, dadurch gekennzeichnet, daß der Ring oder die Scheibe (41) und ein « swivel » (44) für die Übertragung von Druckmedium zur Betätigung der Werkzeuge (27) eine Einheit bilden, die von dem Handgelenk (24) des Roboters getragen wird, wobei die Drehachse des Rings/der Scheibe mit der Ausgangsachse des Handgelenks (24) zusammenfällt.

6. Roboteranlage nach einem der vorhergehenden Ansprüche, dadurch gekennzeichnet, daß der Ring oder die Scheibe (32) zu einem Revolverkopf (26) gehören und von einem Positionierungsmotor (34) der Steuerausrüstung des Roboters in eine gewünschte Winkellage gedreht werden kann.

7. Roboteranlage nach Anspruch 6, dadurch gekennzeichnet, daß die Drehachse des Ringes oder der Scheibe (32) einen Winkel mit der Ausgangsdrehachse des Roboters (7) bildet.

8. Roboteranlage nach Anspruch 7, dadurch gekennzeichnet, daß der Winkel zwischen der Drehachse des Rings oder der Scheibe (32) und der Ausgangsdrehachse des Roboters (7) 45 Grad beträgt.

9. Roboteranlage nach einem der Ansprüche 6 oder 7, dadurch gekennzeichnet, daß die Symmetrieachse einer Greifvorrichtung (27) oder eines sonstigen Werkzeuges in einer bestimmten Position mit der Ausgangsdrehachse des Roboterarms (7) zusammenfällt oder zu dieser parallel verläuft.

10. Roboteranlage nach einem der vorhergehenden Ansprüche, dadurch gekennzeichnet, daß der Ring oder die Scheibe (32) mindestens zwei, vorzugsweise vier oder sechs, Greifvorrichtungen (27) oder sonstige Werkzeuge trägt.

11. Roboteranlage nach einem der vorhergehenden Ansprüche, dadurch gekennzeichnet, daß sie mindestens ein Magazin (13, 14) für mehrere Paletten (20, 21) mit Hilfsmitteln zur Fixierung von Bauteilen (17, 18) in einer bestimmten Position auf den Paletten (20, 21) enthält.

## Claims

1. Robot system for the assembly of a plurality of preferably different parts to form a product or to a product or for machining of a work piece with a number of different speeds, with an assembly or machining station (4), with a robot (7), and with conveyor tracks or magazines (12, 13, 14, 15) with feeding devices for feeding forward parts (16, 17, 18, 22) into the operating range of the robot (7), the robot comprising a support device formed as a rotatable ring and adapted to be positioned in a plurality of positions, which support device is equipped with a number of tools individually operatable and adaptable to the parts or work pieces, as for example gripping devices for the parts, and which tools may be arranged along the circumference of said ring in arbitrary angular positions, the rotational movement and positioning of the support device into the desired angular position being controlled by the control means of the robot (7).

2. Robot system for the assembly of a plurality of preferably different parts to form a product or to a product or for machining of a work piece with a number of different speeds, with an assembly or machining station (4), with a robot (7), and with conveyor tracks or magazines (12, 13, 14, 15) with feeding devices for feeding forward parts (16, 17, 18, 22) into the operating range of the robot (7), the robot comprising a support device formed as a rotatable disc and adapted to be positioned in a plurality of positions, which support device is equipped with a number of tools individually operatable and adaptable to the parts or work pieces, as for example gripping devices for the parts, which tools may be arranged along the circumference of said disc in arbitrary angular positions, the rotational movement and positioning of the support device into the desired angular position being controlled by the control means of the robot (7) and whereby the disc supports a plurality of circumferentially displaceable attachment devices (40) for tools (27), which attachment devices (40) are provided with means for fixing them on the disc.

3. Robot system according to Claim 1, characterized in that said ring supports a plurality of circumferentially displaceable attachment devices (40) for tools (27) which attachment devices (40) are provided with means for fixing them on said ring.

4. Robot system according to any of Claims 2 or 3, characterized in that said ring or disc is mounted directly on the wrist (24) of the robot (7) and that the output shaft of the wrist (24) is rotatable.

5. Robot system according to any of Claims 2 or 3, characterized in that the ring or the disc (41) and a swivel (44) for transferring of pressure medium for operating the tools (27) form a unit supported by the wrist (24) of the robot, the axis of rotation of the ring/disc coinciding with the output axis of the wrist (24).

6. Robot system according to any of the preceding Claims, characterized in that the ring or the disc (32) form part of a turret and can be rotated into a desired angular position by a positioning motor (34) of the control means of the robot.

7. Robot system according to Claim 6, characterized in that the axis of rotation of the ring or the disc (32) forms an angle with the output axis of rotation of the robot (7).

8. Robot system according to Claim 7, characterized in that the angle between the axis of rotation of the ring or the disc (32) and the output axis of rotation of the robot (7) is 45 degrees.

9. Robot system according to any of Claims 6 or 7, characterized in that the symmetry axis of a gripping device (27) or an other tool, in a certain position, coincides with or extends parallel to the output axis of rotation of the robot arm (7).

10. Robot system according to any of the preceding Claims, characterized in that the ring or the disc (32) supports at least two, preferably four or six, gripping devices (27) or other tools.

11. Robot system according to any of the preceding Claims, characterized in that it comprises at least one magazine (13, 14) for a plurality of pallets (20, 21) with auxiliary means for fixing of parts (17, 18) in certain position on the pallets (20, 21).

## Revendications

1. Installation à robot pour le montage de plusieurs composants, de préférence différents, sur un objet ou pour en constituer un, ou pour l'usinage d'une pièce à usiner, possédant un certain nombre de vitesses et comportant un poste (4) de montage et d'usinage, un robot (7) et des pistes de transport ou des magasins (12, 13, 14, 15) comportant des dispositifs d'alimentation servant à faire avancer des composants (16, 17, 18, 22) dans la zone de travail du robot (7), et dans lequel le robot possède un dispositif de support réglable dans plusieurs positions, réalisé sous la forme d'un anneau rotatif et pourvu d'un certain nombre d'outils (27) pouvant être commandés individuellement et adaptés aux composants ou pièces à usiner correspondantes, comme par exemple des dispositifs de préhension pour les composants, les outils pouvant être disposés sur le pourtour dudit anneau dans des positions angulaires quelconques centrées, et dans lequel la rotation et le positionnement du dispositif de support dans la position angulaire désirée est commandé par le dispositif de commande du robot (7).

2. Installation à robot utilisée pour le montage de plusieurs composants de préférence différents sur un objet ou pour en constituer un, ou pour l'usinage d'une pièce à usiner, possédant un certain nombre de vitesses et comportant un poste (4) de montage et d'usinage, un robot (7) et des pistes de transport ou des magasins (12, 13,

14, 15) comportant des dispositifs d'alimentation servant à faire avancer des composants (16, 17, 18, 22) dans la zone de travail du robot (7), et dans lequel le robot possède un dispositif de support séparé réglable dans plusieurs positions, agencé sous la forme d'un disque rotatif et pourvu d'un certain nombre d'outils (27) pouvant être commandés individuellement et adaptés aux composants ou pièces à usiner correspondantes, comme par exemple des dispositifs de préhension pour les composants, les outils pouvant être disposés sur le pourtour dudit anneau dans des positions angulaires quelconques centrées, et dans lequel la rotation et le positionnement du dispositif de support dans la position angulaire désirée est commandé par le dispositif de commande du robot (7), et dans lequel le disque porte plusieurs organes (11) de fixation pour les outils (27), lesdits organes de fixation étant déplaçables dans la direction circonférentielle et comportant des dispositifs permettant leur fixation sur le disque.

3. Installation à robot suivant la revendication 1, caractérisée par le fait que ledit anneau porte plusieurs organes (40) de fixation pour des outils (27), ces organes de fixation étant déplaçables dans la direction circonférentielle et comportant des dispositifs permettant leur fixation sur l'anneau.

4. Installation à robot suivant la revendication 2 ou 3, caractérisée par le fait que l'anneau ou le disque est monté directement sur le poignet (24) du robot (7) et peut tourner autour de l'axe de sortie du poignet (24).

5. Installation à robot suivant la revendication 2 ou 3, caractérisée par le fait que l'anneau ou le disque (41) et un « swivel » (44) pour la transmission d'un fluide sous pression servant à actionner les outils (27) forment une unité qui est portée par le poignet (24) du robot, l'axe de rotation de l'anneau et/ou du disque coïncidant avec l'axe de sortie du poignet (24).

6. Installation à robot suivant l'une des revendications précédentes, caractérisée par le fait que l'anneau ou le disque (32) appartient à une tête révolver (26) et peut être amené par rotation dans une position angulaire désirée, par un moteur de positionnement (34) du dispositif de commande du robot.

7. Installation à robot suivant la revendication 6, caractérisée par le fait que l'axe de rotation de l'anneau ou du disque (32) fait un angle avec l'axe initial de rotation du robot (7).

8. Installation à robot suivant la revendication 7, caractérisée par le fait que l'angle entre l'axe de rotation de l'anneau ou du disque (32) et l'axe initial de rotation du robot (7) est égal à 45 degrés.

9. Installation à robot suivant l'une des revendications 6 ou 7, caractérisée par le fait que l'axe de symétrie d'un dispositif de préhension (27) ou d'un autre outil coïncide, dans une position déterminée, avec l'axe initial de rotation du bras (7) du robot ou est parallèle à cet axe.

10. Installation à robot suivant l'une des revendications précédentes, caractérisée par le fait que l'anneau de disque (32) porte au moins deux et de préférence quatre ou six dispositifs de préhension (27) ou d'autres outils.

11. Installation à robot suivant l'une des revendications précédentes, caractérisée par le fait qu'elle contient au moins un magasin (13, 14) pour plusieurs palettes (20, 21) comportant des moyens auxiliaires pour fixer des composants (17, 18) dans une position déterminée sur les palettes (20, 21).

FIG. 1

0 139 857

*FIG. 2*

*FIG. 3*

FIG. 4

## FIG.5

## FIG.6